# EUROPEAN PATENT APPLICATION

(11) **EP 2 897 329 A1**
(43) Date of publication of application: **22.07.2015**
(21) Application number: 13793468.3
(22) Date of filing: 06.05.2013
(51) Int. Cl.: H04L 12/66

(54) **SERVICE CONTROL METHOD AND APPARATUS OF TERMINAL DEVICE**

(30) Priority: 12.09.2012 CN 201210336278
(71) Applicant: ZTE Corporation, Shenzhen, Guangdong 518057 (CN)
(72) Inventor: YANG, Kun, Shenzhen, Guangdong Province 518057 (CN); WU, Hao, Shenzhen, Guangdong Province 518057 (CN)
(74) Representative: Novagraaf Technologies
(86) International application number: PCT/CN2013/075189
(87) International publication number: WO 2013/174204

(57) **Abstract**

The present invention discloses a service control method and device of a terminal device. The method comprises: an M2M gateway determines a control service currently triggered; the M2M gateway obtains a control instruction corresponding to the control service; and the M2M gateway sends the control instruction to a terminal device and/or a terminal device group. The present invention provides an effective mechanism for performing service control on the terminal device through the M2M gateway, thereby implementing service control on the terminal device.

## Description

### Technical Field

The present invention relates to the field of communications, and in particular to a service control method and device of a terminal device.

### Background

The system framework of a Machine-to-Machine/Man (referred to as M2M) is divided into an M2M application layer, an M2M service capability layer, a communication network layer, an M2M terminal and perceptual extension layer and a management support system.

The M2M terminal and perceptual extension layer divides M2M terminal devices into two categories according to the ability of the M2M terminal device. One is an M2M terminal with the ability to communicate with an M2M communication network, and the M2M terminal can have access to an M2M service platform directly through the communication network, and it can interact with the platform to complete registration, certification and authentication of a terminal, can provide perceptual information required by an application, and can receive the management of a terminal peripheral through service interaction between the M2M service platform and the application. The other one is an M2M gateway with the ability to communicate with the M2M communication network and an M2M stub network, and in addition to connecting the M2M stub network and a perceptual device to the network, the M2M gateway can also receive the management information for an M2M stub network node, and perform a protocol transition between the M2M stub network and the M2M communication network. Terminal peripherals are sensors and so on which are used for environmental perception and data acquisition, and they have limited processing capacity, storage capacity and power supply and so on and only have the ability of short distance communication. A single terminal of this type is called as a terminal peripheral, and a network formed by multiple such terminal nodes is called as an M2M stub network.

The M2M stub network is composed of nodes (such as sensors and so on) with the ability of information acquisition, simple processing and communication, in order to collaboratively perceive, collect the information related to supervised objects within a network coverage area, and send surveillance data to the M2M gateway which then transfers sensed data through a communication network to the M2M service platform or applications for analysis and processing.

The terminal peripheral refers to a single device with a function of environmental perception, such as a sensor and so on, and it can send perceived information to the M2M service platform through the M2M gateway or the M2M terminal, and meanwhile can also receive downlink control over it from an M2M application or the M2M service platform.

The M2M stub network and the terminal peripheral have features such as limited processing capacity, storage capacity and power supply and so on, and it can not communicate directly with a communication network, as a result of needing to have access to the communication network by the aid of the M2M gateway. The M2M gateway can perform a protocol transition between the M2M stub network and a top network. In addition to aggregating and forwarding data information collected from the M2M stub network and the terminal peripheral, the M2M gateway can also receive the control information of the M2M service platform so as to manage the M2M stub network and the terminal peripheral.

However, in the related art, there is not an effective mechanism to realize a service control over terminal devices through the M2M gateway.

### Summary

Aiming to the problem that there is not an effective mechanism to realize a service control over terminal devices via the M2M gateway in the related art, the present invention provides a service control method and device of a terminal device, in order to at least resolve the above problem.

According to an aspect of the present invention, there is provided a service control method of a terminal device, which comprises: an M2M gateway determining a control service currently triggered; the M2M gateway acquiring a control instruction corresponding to the control service; and the M2M gateway sending the control instruction to a terminal device and/or a terminal device group.

Preferably, the M2M gateway determining a control service currently triggered comprises: the M2M gateway detecting a service triggering condition currently met; and the M2M gateway acquiring a control service corresponding to the service triggering condition according to a corresponding relationship between the service triggering condition and the control service.

Preferably, the M2M gateway detecting a service triggering condition currently met comprises at least one of the following: the M2M gateway detecting whether a current system time meets a preset service triggering time value; the M2M gateway detecting whether the collected data meets a preset service triggering threshold; and the M2M gateway detecting whether a control instruction of a scenario mode selection service is received.

Preferably, the M2M gateway sending the control instruction to a terminal device and/or a terminal device group comprises: the M2M gateway judging whether the control instruction to be processed by the terminal device and/or the terminal device group is not stored; if yes, sending the control instruction to the terminal device and/or the terminal device group.

Preferably, in the case where the judgment result is yes, the method also comprises: the M2M gateway storing the control instruction.

Preferably, in the case where the judgment result is no, the method also comprises: the M2M gateway judging whether the priority level of the control instruction is not lower than that of a control instruction to be processed; if yes, sending the control instruction to the terminal device and/or the terminal device group.

Preferably, in the case where the priority level of the control instruction is not lower than that of the control instruction to be processed, the method also comprises: the M2M gateway storing the control instruction, and deleting the control instruction to be processed.

Preferably, in the case where the priority level of the control instruction is lower than that of the control instruction to be processed, the method also comprises: the M2M gateway discarding the control instruction.

Preferably, the M2M gateway sending the control instruction to a terminal device and/or a terminal device group comprises: the M2M gateway sending the control instruction to the terminal device and/or the terminal device group indicated by the control instruction.

Preferably, after the M2M gateway sends the control instruction to the terminal device and/or the terminal device group, the method also comprises: the M2M gateway processing an execution result of the control instruction according to a feedback of the terminal device and/or the terminal device group.

Preferably, the M2M gateway processing the execution result of the control instruction according to a feedback of the terminal device and/or the terminal device group comprises: the M2M gateway receiving information about the execution result fed back after the terminal device and/or the terminal device group executing the control instruction; and in the case where the information about the execution result indicates that the execution of the control instruction fails, the M2M resending the control instruction to the terminal device and/or the terminal device group.

Preferably, resending the control instruction to the terminal device and/or the terminal device group comprises: the M2M gateway judging whether the control instruction does not reach a valid time of the control instruction; if yes, resending the control instruction to the terminal device and/or the terminal device group.

Preferably, resending the control instruction to the terminal device and/or the terminal device group comprises: the M2M gateway judging whether the current number of resending times does not exceed a maximum number of resending times of the control instruction; if yes, resending the control instruction to the terminal device and/or the terminal device group.

Preferably, resending the control instruction to the terminal device and/or the terminal device group comprises: the M2M gateway judging whether the control instruction does not reaches the valid time of the control instruction; if yes, judging whether the current number of resending times does not exceed the maximum number of resending times of the control instruction; and if yes, resending the control instruction to the terminal device and/or the terminal device group.

Preferably, in the case where the judgment result is no, the method also comprises: the M2M gateway acquiring a reason value when the terminal device fails to execute the control instruction, informing an M2M service platform and/or a corresponding user of the reason, and deleting the control instruction.

Preferably, in the case where the information about the execution result indicates that the execution of the control instruction succeeds, the method also comprises: the M2M gateway acquiring a state value after the terminal device successfully executes the control instruction, and deleting the control instruction.

Preferably, in the case where the feedback of the terminal device or the terminal device group is not received, the method also comprises: when a storage time of the control instruction exceeds the valid time of the control instruction, and/or the number of resending times of the control instruction exceeds the maximum number of resending times of the control instruction, the M2M gateway deleting the control instruction, and informing the M2M service platform and/or the corresponding user of the situation, and deleting the control instruction.

Preferably, sending the control instruction to the terminal device and/or each of the terminal device group comprises: the M2M gateway acquiring a control instruction corresponding to the terminal device and/or the terminal device group to be currently sent within the control instruction; and the M2M gateway sending the control instruction corresponding to the terminal device and/or the terminal device group to the terminal device and/or the terminal device group to be currently sent.

According to another aspect of the present invention, there is provided a service control device of a terminal device which is located in an M2M gateway and comprises: a determination component configured to determine a control service currently triggered; an acquisition component configured to acquire a control instruction corresponding to the control service; and a first processing component configured to send the control instruction to a terminal device and/or a terminal device group.

Preferably, the determination component comprises: a detection element configured to detect a service triggering condition currently met; and an acquisition element configured to, according to a corresponding relationship between the service triggering condition and the control service, acquire the control service corresponding to the service triggering condition.

Preferably, the detection element is configured to detect whether a current system time meets a preset service triggering time value, and/or whether the collected data meets a preset service triggering threshold, and/or whether a control instruction of a scenario mode selection service is received.

Preferably, the first processing component comprises: a first judgment element configured for judging whether the control instruction to be processed by the terminal device and/or the terminal device group is not stored; and a first sending element configured to, when a judgment result of the first judgment element is yes, send the control instruction to the terminal device and/or the terminal device group.

Preferably, the first processing component also comprises: a storage element configured to, when a judgment result of the first judgment element is yes, store the control instruction.

Preferably, the first processing component also comprises: a second judgment element configured to, when a judgment result of the first judgment element is no, judge whether the priority level of the control instruction is not lower than that of a control instruction to be processed; and the first sending element further configured to, when a judgment result of the second judgment element is yes, send the control instruction to the terminal device and/or the terminal device group.

Preferably, the first processing component also comprises: a discarding element configured to, when a judgment result of the first judgment element or the second judgment element is no, discard the control instruction.

Preferably, the device also comprises: a second processing component configured to process an execution result of the control instruction according to a feedback of the terminal device and/or the terminal device group.

Preferably, the second processing element comprises: a receiving element configured to receive the information about an execution result fed back after the terminal device and/or the terminal device group executing the control instruction; and a processing element configured to, in the case where the information about the execution result indicates that the execution of the control instruction fails, resend the control instruction to the terminal device and/or the terminal device group.

Preferably, the processing element comprises: a third judgment element configured to judge whether the control instruction does not reach a valid time of the control instruction; and a second sending element configured to, when a judgment result of the third judgment element is yes, resend the control instruction to the terminal device and/or the terminal device group.

Preferably, the processing element also comprises: a fourth judgment element configured to judge whether a current number of resending times does not exceed a maximum number of resending times of the control instruction; and a third sending element configured to, when a judgment result of the fourth judgment element is yes, resend the control instruction to the terminal device and/or the terminal device group.

Preferably, the processing element also comprises: an informing element configured to, when a judgment result of the third judgment element or the fourth judgment element is no, acquire a reason value when the terminal device fails to execute the control instruction, inform an M2M service platform and/or a corresponding user of the reason, and delete the control instruction.

Preferably, the processing element is further configured to, in the case where the information about the execution result indicates that the execution of the control instruction succeeds, acquire a state value after the terminal device successfully executes the control instruction, and delete the control instruction.

Preferably, the second processing component is further configured to, in the case of not having received the feedback of the terminal device and/or the terminal device group, when a storage time of the control instruction exceeds the valid time of the control instruction and/or the number of resending times of the control instruction exceeds the maximum number of resending times of the control instruction, delete the control instruction, and inform the M2M service platform and/or the corresponding user of the case.

According to a still aspect of the present invention, there is provided an M2M gateway, which comprises: a service control device of any one of the above terminal devices provided by the present invention.

By way of the present invention, an M2M gateway determines a control service currently triggered, acquires a control instruction corresponding to the control service, and sends the control instruction to a terminal device and/or a terminal device group, which provides an effective mechanism to realize a service control over terminal devices via the M2M gateway, thereby realizing the service control over a terminal device.

### Brief Description of the Drawings

Drawings, provided for further understanding of the present invention and forming a part of the specification, are used to explain the present invention together with embodiments of the present invention rather than to limit the present invention, wherein:
Fig.1 is a structure diagram of a service control device of a terminal device according to an embodiment of the present invention;
Fig.2 is a structure diagram of a determination component preferred according to an embodiment of the present invention;
Fig.3 is a structure diagram 1 of a first processing component preferred according to an embodiment of the present invention;
Fig.4 is a structure diagram 2 of the first processing component preferred according to an embodiment of the present invention;
Fig.5 is a structure diagram 3 of the first processing component preferred according to an embodiment of the present invention;
Fig.6 is a structure diagram 4 of the first processing component preferred according to an embodiment of the present invention;
Fig.7 is a structure diagram of a service control device of a terminal device preferred according to an embodiment of the present invention;
Fig.8 is a structure diagram 1 of a processing element preferred according to an embodiment of the present invention;
Fig.9 is a structure diagram 2 of the processing element preferred according to an embodiment of the present invention;
Fig.10 is a flow diagram of a service control method of a terminal device according to an embodiment of the present invention;
Fig.11 is a structure diagram of a service control device of an M2M gateway according to an embodiment of the present invention;
Fig.12 is a structure diagram of an M2M gateway according to an embodiment of the present invention.

### Detailed Description of Embodiments

The preferred embodiments are described in conjunction with the drawings as follows. It shall be understood that the embodiments of the present application and the features of the embodiments can be combined with each other if there is no conflict.

A service control device of a terminal device is provided according to an embodiment of the present invention, and the device is located in an M2M gateway and configured to realize the service control over the terminal device.

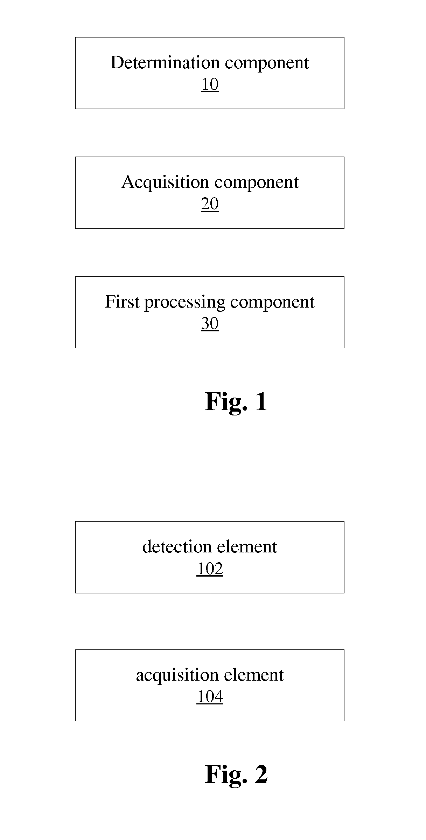

Fig.1 is a structure diagram of a service control device of a terminal device according to an embodiment of the present invention, and as shown in Fig.1, the device mainly comprises: a determination component **10,** an acquisition component **20** and a first processing component **30.** The determination component **10** is configured to determine at least one control service currently triggered; the acquisition component **20** is coupled to the determination component **10,** and is configured to acquire at least one control instruction corresponding to the at least one control service; and the first processing component **30** is coupled to the acquisition component **20,** and is configured to send the at least one control instruction to at least one terminal device and/or a terminal device group.

In the embodiment of the present invention, the determination component **10** acquires the current control service, and the acquisition component **20** acquires the control instruction corresponding to the control service; and the first processing component **30** sends the control instruction to the terminal device and/or the terminal device group. The above solution provides an effective mechanism to realize the service control over the terminal device through the M2M gateway, thereby realizing the service control over the terminal device.

Fig.2 is a structure diagram of a determination component preferred according to an embodiment of the present invention, and as shown in Fig.2, the determination component **10** may comprise: a detection element **102** configured to detect a service triggering condition currently met; and an acquisition element **104,** which is coupled to the detection element **102,** and is configured to acquire the at least one control service corresponding to the service triggering condition according to a corresponding relationship between the service triggering condition and the control service.

In a preferred implementation of the embodiment of the present invention, the detection element **102** may comprise at least one of the following: a time sequence schedule element which is configured to detect whether a current system time meets a preset service triggering time value; a data detection element which is configured to detect whether the collected data meets a preset service triggering threshold; and a scenario selection element which is configured to detect whether a control instruction of a scenario mode selection service is received.

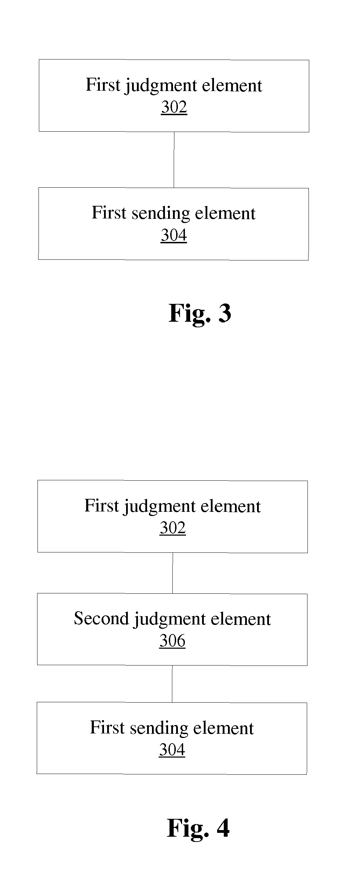

Fig.3 is a structure diagram 1 of a first processing component preferred according to an embodiment of the present invention, and as shown in Fig.3, the first processing component **30** may comprise a first judgment element **302** which is configured to judge whether a control instruction, which is to be processed, of the terminal device and /or the terminal device group; and a first sending element **304** which is coupled to the first judgment element **302,** and is configured to send the control instruction to the terminal device and/or the terminal device group when a judgment result of the first judgment element **302** is yes.

Fig.4 is a structure diagram 2 of the first processing component preferred according to an embodiment of the present invention, and as shown in Fig.4, the first processing component **30** may further comprise: a second judgment element **306** which is coupled to the first judgment element **302,** and is configured to judge whether a priority level of the control instruction is not lower than that of a control instruction to be processed when a judgment result of the first judgment element **302** is no. The first sending element **304** is further configured to send the control instruction to the terminal device and/or the terminal device group when a judgment result of the second judgment element **306** is yes. Preferably, the control instruction to be processed may also be replaced by the control instruction.

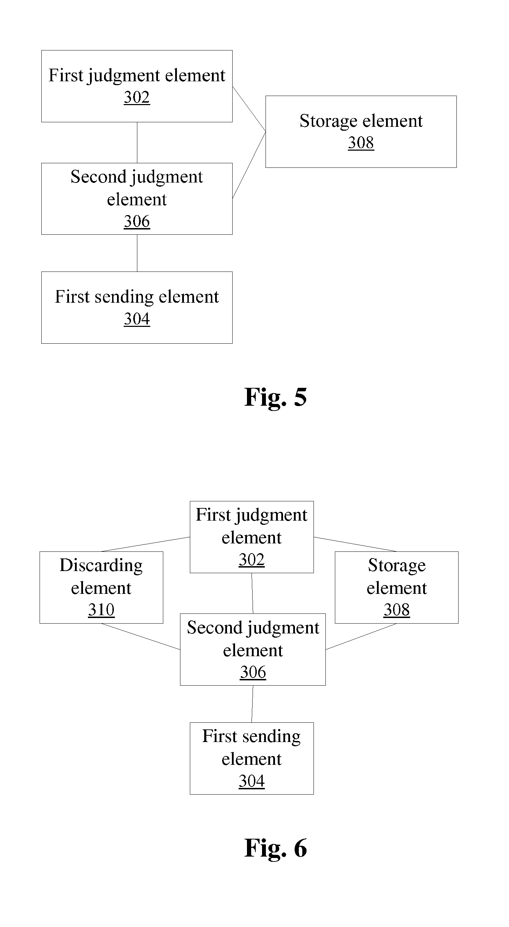

Fig.5 is a structure diagram 3 of the first processing component preferred according to an embodiment of the present invention, and as shown in Fig.5, the first processing component **30** may further comprise: a storage element **308** which is coupled to the first judgment element **302** or the second judgment element **306,** and is configured to store the control instruction when a judgment result of the first judgment element **302** or the second judgment element **306** is yes.

Fig.6 is a structure diagram 4 of the first processing component preferred according to an embodiment of the present invention, and as shown in Fig.6, the first processing component **30** may further comprise: a discarding element **310** which is configured to discard the control instruction when a judgment result of the first judgment element **302** or the second judgment element **306** is no.

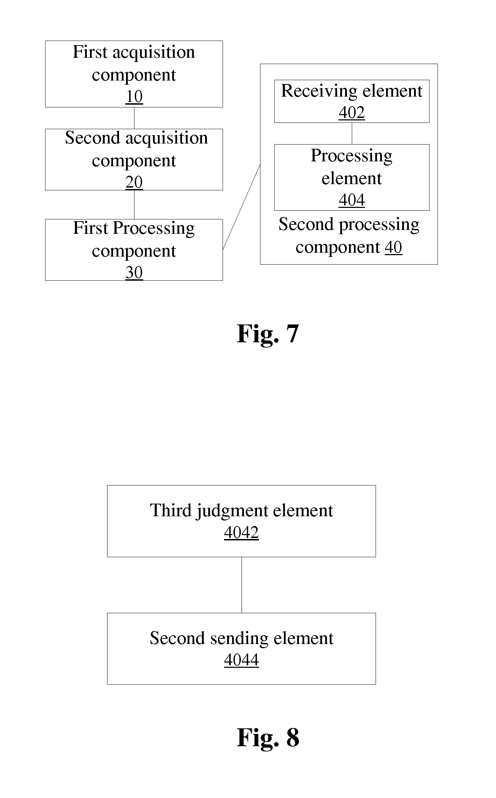

Fig.7 is a structure diagram of a service control device of a terminal device preferred according to an embodiment of the present invention, and as shown in Fig.7, the device may further comprise: a second processing component **40** which is coupled to the first processing component **30,** and is configured to process an execution result of executing the control instruction according to a feedback from the terminal device and/or the terminal device group. Preferably, processing the execution result may comprise acquiring a state value when the processing succeeds, acquiring and filtering a reason value when the processing fails, and informing a user or the service platform of a runtime exception of the terminal device.

In a preferred implementation of an embodiment of the present invention, as shown in Fig.7, the second processing component **40** may comprise: a receiving element **402** which is configured to receive the information about an execution result fed back after the terminal device and/or the terminal device group executes the control instruction; and a processing element **404** which is coupled to a receiving element **402,** and is configured to resend the control instruction to the terminal device and/or the terminal device group in the case where the information about the execution result indicates that the execution of the control instruction fails.

Fig.8 is a structure diagram 1 of a processing element preferred according to an embodiment of the present invention, and as shown in Fig.8, the processing element **404** may comprise a third judgment element **4042** which is configured to judge whether the control instruction does not reach a valid time of the control instruction; and a second sending element **4044** coupled to the third judgment element **4042,** which is configured to resend the above control instruction to the terminal device and/or the terminal device group when a judgment result of the third judgment element **4042** is yes.

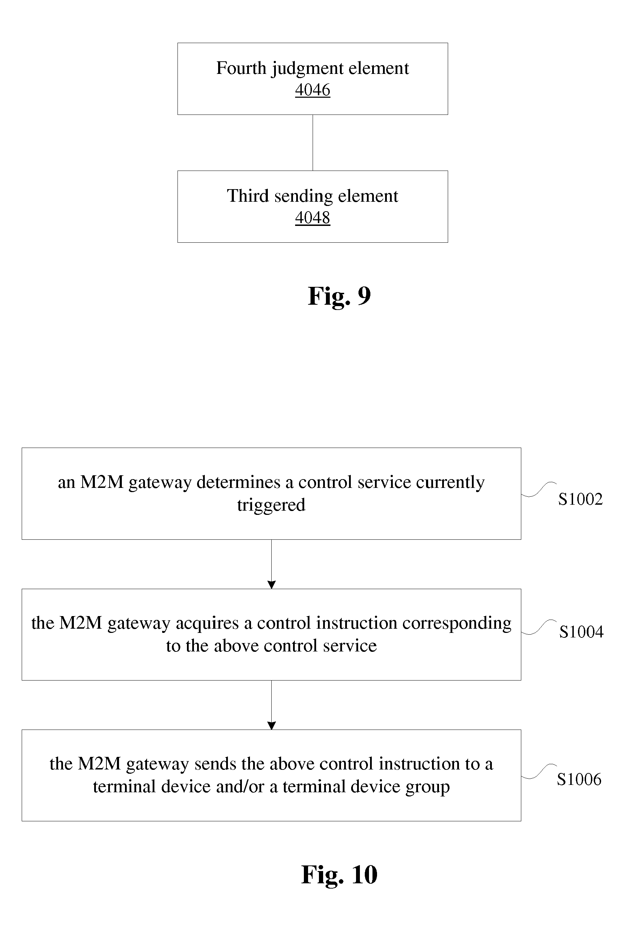

Fig.9 is a structure diagram 2 of the processing element preferred according to an embodiment of the present invention, and as shown in Fig.9, the processing element **404** may further comprise: a fourth judgment element **4046,** which is configured to judge whether a current number of resending times does not exceed a maximum number of resending times of the control instruction; and a third sending element **4048,** which is configured to resend the above control instruction to the terminal device and/or the terminal device group when a judgment result of the fourth judgment element **4046** is yes.

In an embodiment of the present invention, the fourth judgment element **4046** can also be coupled to the third judgment element **4042,** and is configured to judge whether a current number of resending times does not exceed a maximum number of resending times of the control instruction when a judgment result of the third judgment element **4042** is no. The second sending element **4044** or the third sending element **4048** is configured to resend the above control instruction to the terminal device and/or the terminal device group when a judgment result of the fourth judgment element **4046** is yes.

In a preferred implementation of an embodiment of the present invention, the processing element **404** may further comprise: an informing element which is configured to, in the case where a judgment result of the third judgment element **4042** or the fourth judgment element **4046** is no, acquire a reason value when the terminal device fails to execute the control instruction, inform an M2M service platform and/or a corresponding user of the reason, and delete the control instruction.

Preferably, the processing element **404** is further configured to, in the case where the information about the execution result indicates that the execution of the control instruction succeeds, acquire a state value after the terminal device successfully executes the control instruction, and delete the control instruction.

In a preferred implementation of an embodiment of the present invention, the second processing component **40** is further configured to, in the case where the feedback of the terminal device or the terminal device group is not received, when a storage time of the control instruction exceeds the valid time of the control instruction and/or the number of resending times of the control instruction exceeds the maximum number of resending times of the control instruction, delete the control instruction and inform the M2M service platform and/or the corresponding user of the situation.

In a practical application, the first processing component **30,** the second processing component **40** can also be configured in one component to realize the above function of the present invention. It should be noted that, the embodiments of the present invention are not limited to the division and realization of the above functional components, and one skilled in the art can configure the corresponding functional components according to actual needs so as to realize the above function of the embodiments of the present invention.

According to an embodiment of the present invention, there is also provided an M2M gateway, which comprises a service control device of any one of the above terminal devices provided by embodiments of the present invention.

According to an embodiment of the present invention, there is also provided a service control method of a terminal device so as to realize the service control over a terminal device in the service control device of the M2M gateway or the terminal device provided by the embodiments of the present invention.

Fig.10 is a flow diagram of a service control method of a terminal device according to an embodiment of the present invention, and as shown in Fig.10, the method mainly comprises step S1002 to step S1006:
in step S1002, the M2M gateway determines a control service currently triggered;
in step S1004, the M2M gateway acquires a control instruction corresponding to the above control service;
in step S1006, the M2M gateway sends the above control instruction to a terminal device and/or a terminal device group.

By way of an embodiment of the present invention, the M2M gateway determines a control service currently triggered, acquires a control instruction corresponding to the control service, and sends the control instruction to a terminal device and/or a terminal device group, which provides an effective mechanism to realize the service control over the terminal device through the M2M gateway, thereby realizing the service control over the terminal device.

In a preferred implementation of an embodiment of the present invention, when the M2M gateway determines a control service currently triggered, the M2M gateway can detect a service triggering condition currently met, and acquires a control instruction corresponding to the service triggering condition currently met according to a corresponding relationship between the service triggering condition and the control service. Preferably, one or more service triggering conditions can be set in the M2M gateway, and the service triggering condition can be configured by a user or set by an operator or preset when the device is rolled out of a manufacturing plant. Preferably, the control instruction corresponding to the above control service can be acquired according to the corresponding relationship between the control service and the control instruction.

In a practical application, a corresponding relationship between the service triggering condition and the control service can be recorded by a corresponding relationship table between the service triggering condition and the control service, and a corresponding relationship between the control service and the control instruction can be recorded by a corresponding relationship table between the control service and the control instruction.

In a preferred implementation of an embodiment of the present invention, the M2M gateway detecting a service triggering condition currently met comprises at least one of the following: the M2M gateway detecting whether a current system time meets a preset service triggering time value; the M2M gateway detecting whether the collected data meets a preset service triggering threshold; and the M2M gateway detecting whether a control instruction of a scenario mode selection service is received.

For example, in an intelligent home system, one or more triggering time can be set in an intelligent home gateway, and when the intelligent home gateway detects that the current time of the system is the set service triggering time value, a control service corresponding to the service triggering time value according to a corresponding relationship between the service triggering time value and the control service. For example, when it is detected that the current time of the system is set to a triggering time value of a getting-up event, a control service corresponding to a preset mode can be looked up and a corresponding terminal device is controlled, for example adjusting the switch of an alarm clock and/or adjusting the brightness of a light and/or adjusting the opening degree of a curtain.

Or, a triggering threshold can be set in the intelligent home system, and when the intelligent home gateway detects that the data collected by the intelligent home gateway meets the service triggering threshold, a control service corresponding to the service triggering value is looked up according to a corresponding relationship between the service triggering threshold and the control service. For example, when it is detected that the collected temperature and/or air humidity and/or light brightness data reaches the preset threshold, a preset control service corresponding to the temperature and/or air humidity and/or light brightness data is looked up and a corresponding terminal device is controlled, for example to adjust the temperature of an air condition and/or adjusting the brightness of a light and/or adjusting the opening degree of a curtain.

Or, when the intelligent home gateway receives a scenario mode selection instruction, a control service corresponding to a scenario mode is looked up according to a corresponding relationship between the scenario mode instructed by the instruction and the control service. For example, when it is detected that the received scenario mode selection instruction indicates a night mode, a preset control service corresponding to the mode can be looked up and a corresponding terminal device is controlled, for example to adjust the temperature of an air condition device and/or the light brightness of a light and/or adjusting the switches of doors and windows.

A control instruction to be processed can be stored in the M2M gateway, and therefore in a preferred implementation of an embodiment of the present invention, when the M2M gateway sends the control instruction to the terminal device and/or the terminal device group, the M2M gateway can judge whether the control instruction to be processed of the terminal device and/or the terminal device group is stored, and if yes, the control instruction is sent to the terminal device and/or the terminal device group. Preferably, in the case where the control instruction to be processed of the terminal device and/or the terminal device group is not stored, the current control instruction data can be stored. In a practical application, in the case where the control instruction to be processed of the terminal device and/or the terminal device group is stored, the current control instruction data can be discarded.

In a preferred implementation of an embodiment of the present invention, the priority level of each control instruction can be set, and therefore when a control instruction to be processed of the terminal device and/or the terminal device group is stored, it can also be judged whether the priority level of the control instruction is not lower than that of the control instruction to be processed; if yes, the control instruction is sent to the terminal device and/or the terminal device group, and the control instruction to be processed is replaced by the control instruction. Preferably, in the case where the priority level of the control instruction is not lower than that of the control instruction to be processed, the M2M gateway can also store the current control instruction, and delete the control instruction to be processed. In a practical application, when the priority level of the control instruction is lower than that of the control instruction to be processed, the control instruction can be discarded.

Preferably, after the M2M gateway stores the control instruction, the M2M gateway can also count time for the control instruction according to a valid time of the control instruction, and delete the control instruction after the timing exceeds the valid time.

In a preferred implementation of an embodiment of the present invention, the terminal device and/or the terminal device group corresponding to the control service can be recorded in the corresponding relationship between the control service and the control instruction, and therefore when the M2M gateway sends the control instruction to the terminal device and/or the terminal device group, the control instruction is sent to the terminal device and/or the terminal device group indicated by the control instruction.

Preferably, after the M2M gateway sends the control instruction to the terminal device and/or the terminal device group, the M2M gateway can process the execution result of the control instruction according to the feedback of the terminal device and/or the terminal device group. Preferably, processing the execution result may comprises storing a state value when the processing succeeds, storing and filtering a reason value when the processing fails, and informing the user or the service platform of a runtime exception of the terminal device. Several feedbacks of the terminal device and/or the terminal device group will be described below.

In the case where the terminal device or the terminal device group feeds back the information about the execution result, the M2M gateway can receive the information about the execution result fed back after the terminal device and/or the terminal device group executes the control instruction; and in the case where the execution result information indicates the execution of the control instruction fails, the M2M gateway can resend the above control instruction to the terminal device and/or the terminal device group. Preferably, in the case where the execution succeeds, the M2M gateway can delete the above control instruction. Preferably, the M2M gateway can also store the information about execution result, and the stored execution result information can be viewed by an upper platform or a user, or the M2M gateway can inform the M2M service platform and/or the corresponding user of the information.

In a preferred implementation of an embodiment of the present invention, the valid time of a control instruction can be set, and therefore in the case of resending the control instruction to the terminal device and/or the terminal device group, the M2M gateway can judge whether the control instruction does not reach the valid time of the control instruction; and if yes, the control instruction is resent to the terminal device and/or the terminal device group. Preferably, if no, the control instruction can be discarded and the information about the execution result can be stored, and the stored execution result information can be viewed by an upper platform or a user, or the M2M gateway can inform the M2M service platform and/or the corresponding user of the information.

In another preferred implementation of an embodiment of the present invention, a maximum number of resending times of the control instruction can also be set, and therefore in the case of resending the control instruction to the terminal device and/or the terminal device group, the M2M gateway can judge whether the current number of resending times does not exceed the maximum number of resending times of the control instruction; and if yes, the control instruction is resent to the terminal device and/or the terminal device group. Preferably, if no, the control instruction can be discarded and the information about the execution result can be stored, and the stored execution result information can be viewed by an upper platform or a user, or the M2M gateway can inform the M2M service platform and/or the corresponding user of the information.

Preferably, in a still preferred implementation of an embodiment of the present invention, both the valid time and the maximum number of resending times of the control instruction can be set at the same time, and therefore in the case of resending the control instruction to the terminal device and/or the terminal device group, the M2M gateway can judge whether the control instruction does not reach the valid time of the control instruction; if yes, then it judges whether the current number of resending times does not exceed the maximum number of resending times of the control instruction; if yes, then it resends the control instruction to the terminal device and/or the terminal device group. Preferably, if no, it can then acquire the reason value when the terminal device fails to execute the control instruction, and inform an M2M service platform and/or a corresponding user of the reason, and delete the control instruction.

Preferably, in the case where the information about the execution result indicates the execution of the control instruction succeeds, the M2M gateway can also acquire a state value after the terminal device successfully executes the control instruction, and delete the control instruction.

In the case where the terminal device or the terminal device group does not offer the feedback, the M2M gateway can delete the control instruction when a storage time of the control instruction exceeds the valid time of the control instruction and/or the number of resending times of the control instruction exceeds the maximum number of resending times of the control instruction. Preferably, a reason of deleting the control instruction can also be stored, for example not receiving the feedback or the time for storing the control instruction exceeding the valid time and so on.

In an embodiment of the present invention, in order to improve the reliability of the service control of the M2M gateway, when the feedback of the terminal device or the terminal device group is not received for a long time, the execution information can be queried via the terminal device or the terminal device group.

In an embodiment of the present invention, for each terminal device of the terminal device and/or the terminal device group, in the case of sending the control instruction, the M2M gateway can acquire a control instruction corresponding to the terminal device and/or the terminal device group to be currently sent within the control instructions, and send the control instruction corresponding to the terminal device and/or the terminal device group to the terminal device and/or the terminal device group to be currently sent.

Another implementation of the method and device of the above embodiments is described below.

According to an embodiment of the present invention, there is also provided a service control method and device of a terminal device which are used to realize the service control over a terminal device by an M2M gateway, thereby realizing the collaborative interaction among the terminal devices.

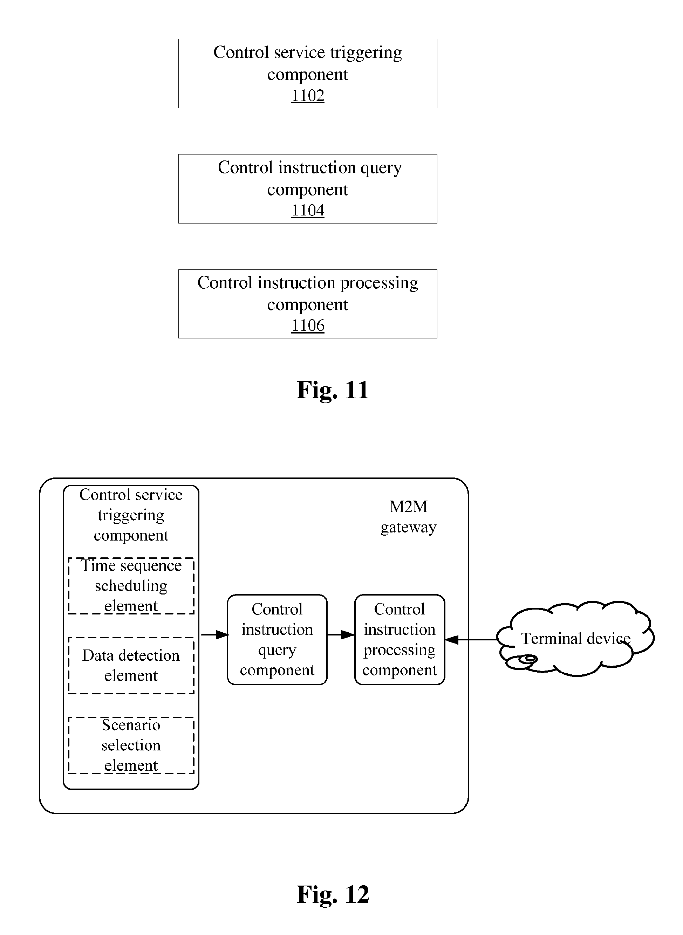

Fig.11 is a structure diagram of a service control device of an M2M gateway according to an embodiment of the present invention, and as shown in Fig.11, the service control device of the M2M gateway may comprise: a control service triggering component **1102,** a control instruction query component **1104** and a control instruction processing component **1106.** Wherein, the control service triggering component **1102** may comprise: a time sequence scheduling element, a data detection element and a scenario selection element.

The control service triggering component **1102,** which is equivalent to the determination component **10** of the above embodiment of the present invention, is configured to determine a service logic met by the M2M gateway, wherein each service corresponds to a control service identifier.

The control instruction query component **1104,** which is equivalent to the acquisition component **20** of the above embodiment of the present invention, is configured to index the control instruction data corresponding to the control service identifier, wherein the control instruction data may comprise: a device identifier or a device group identifier, a control information, a valid time and a priority level and so on.

The control instruction processing component **1106,** which is equivalent to the first processing component **30,** the receiving component **40** and the processing element **404** of the above embodiment of the present invention, is configured to process the control instruction data, including the storing, forwarding, timing, resending, processing of priority levels and processing of execution results.

Fig.12 is a structure diagram of an M2M gateway according to an embodiment of the present invention, and as shown in Fig.12, the M2M gateway may comprise the above service control device of the above M2M gateway, and preferably it may further comprise: a data storage component and a data distribution component. Wherein, the data storage component is configured to store each data of the M2M system, and the data distribution component is configured to distribute each data to a terminal device.

In a practical application, the function of distributing the control instruction data can also be realized by the control instruction processing component **1106,** instead of distributing the control instruction data through the data distribution component.

In an embodiment of the present invention, when detecting an event or data defined by the control service, the control service triggering component sends a service triggering signalling to the control instruction query component, wherein the service triggering signalling comprises an triggered control service identifier. The control service can be set locally by a user, or can also be issued by the service platform.

The service triggering signalling can be generated when the time sequence scheduling element detects that the system time of the M2M gateway meets "a service triggering value", and can also be generated when the data detection element detects that the data collected in the data storage component of the M2M gateway meets "a service triggering threshold", or can be generated when the scenario selection element detects a local or remote scenario mode selection signalling.

After receiving the service triggering signalling, the control instruction query component reads the control service identifier included in the service triggering signalling, indexes the control instruct data corresponding to the control service identifier in the data stored locally, and sends the indexed control instruction data to the control instruction processing component.

After receiving the control instruction data, the control instruction processing component reads a device identifier or a device group identifier, the information of priority level of an instruction included in the control instruction data, and queries the state of the control instruction data corresponding to the device or device group in the data stored locally according to the device identifier or the device group identifier, which can be processed in the following way:
if the device or the device group corresponding to the device identifier or the device group identifier does not has the control instruction data, the received data is then stored; at the same time a data timer is set locally, a time value of the data timer is set according to the information of a valid time of the received data, and then the timer is started, and the received control instruction data is sent to the data distribution component of the M2M gateway.

Preferably, if the priority level of the existing control instruction data of the device or the device group corresponding to the device identifier or the device group identifier is higher than that of the received control instruction data, the received control instruction data is then discarded; if the priority level of the existing control instruction data of the device or the device group corresponding to the device identifier or the device group identifier is lower than that of the received control instruction data or same to that of the received control instruction data, the existing control instruction data is removed and the received data is stored, and at the same time the time value of the data timer is reset according to the information of a valid time of the received data, the timer is restarted and the received control instruction data is sent to the data distribution component of the M2M gateway.

After receiving the control instruction data, the data distribution component of the M2M gateway reads the device identifier or the device group identifier and the control information included therein, and distributes the control information through the control signalling to a terminal device corresponding to the device identifier or the device group identifier according to the device identifier or the device group identifier.

After the terminal device receives the control signalling, an operation indicated by the control information is analyzed and executed, and the execution result is fed back to the control instruction processing component. The execution result comprises the device identifier or the device group identifier, the successful execution and a state value after the terminal device executes the operation, or a failing execution and a reason value of the failure.

The control instruction processing component can process the control instruction data according to a feedback of the terminal device, and in an embodiment of the present invention this can be done in the following way:
if the feedback result indicates that the operation succeeds, then the control instruction processing component removes the control instruction data of the corresponding device or the corresponding device group, and the execution result is sent to the data storage component of the M2M gateway so as to provide the operating data query for the user or the service platform; and if the feedback result indicates that the operation fails, then the control instruction processing component resends the control instruction data of a corresponding device or a corresponding device group according to a maximum number of resending times.

Preferably, if the control instruction data expires or reaches the maximum number of resending times, then the control instruction processing component removes the control instruction data of the corresponding device or the corresponding device group, and sends the execution result to the data storage component of the M2M gateway so as to provide the operating data query for the user or the service platform; and at the same time the reason value is filtered, and the user or the service platform is informed of a runtime exception of the terminal device.

The above method of embodiments of the present invention is described below by particular examples.

### Example one

In example one, the time sequence scheduling component triggering the service control is taken as an example to illustrate.

When detecting that the system time of the M2M gateway meets a service triggering time value of control service A in "a time sequence scheduling control service list" stored locally, the time sequence scheduling element of the service triggering component sends a service triggering signalling to the instruction query component, wherein the time sequence scheduling control service list comprises a control service identifier and a service triggering time value, and the service triggering signalling comprises a control service identifier of control service A.

After receiving the service triggering signalling, the control instruction query component reads the control service identifier included therein, indexes the control instruct data corresponding to the control service identifier in the data stored locally, and sends the indexed control instruction data to the control instruction processing component.

In a practical application, a control instruction data query list can be set up in the stored data of the control instruction query component so as to indicate a mapping relationship between the control service identifier and the control instruction data, as shown in Table 1. Wherein, the information of priority levels can be set in a user location or set when the service platform issues the control service, and can also be allocated by the M2M gateway according to a service level or a user level.

**Table 1. Control instruction data query list**

| Control Service Identifier | Device (Device Group) Identifier | Control Information | Valid Time | Priority Level |
|---|---|---|---|---|
| Control Service #1 | Device #1 | Operation 1 | Time Value | Level Value |
| | ... | ... | | |
| | Device #N | Operation N | | |
| ... | ... | ... | ... | ... |
| Control Service #N | Device Group #N | Group Operation N | Time Value | Level Value |
| ... | ... | ... | ... | ... |

After receiving the control instruction data, the control instruction processing component reads a device identifier or a device group identifier, information of the priority level of an instruction included therein, and queries the state of the control instruction data of the corresponding device or the corresponding device group in the data stored locally according to the device identifier or the device group identifier.

In a practical application, a control instruction data query list can be set up in the stored data of the control instruction processing component so as to indicate the state of the control instruction data of the device or the device group, as shown in Table 2. Wherein, the maximum number of resending times can be set in a user location or set when the service platform issues the control service, and can also be configured by the M2M gateway according to a system default.

**Table 2. Control instruction data processing list**

| Device (Device Group) Identifier | Control Information | Valid Time | Priority Level | Number of Resending Times |
|---|---|---|---|---|
| Device #1 | Operation 1 | Time Value | Level Value | Number of Times |
| ... | ... | ... | ... | ... |
| Device Group #N | Group Operation N | Time Value | Level Value | Number of Times |
| ... | ... | ... | ... | ... |

If the state of data indicates that the corresponding device or the corresponding device group does not has the existing control instruction data, the control instruction processing component stores the received data into the control instruction data processing list; and at the same time a data timer is set locally, a time value of the data timer is set according to the information of a valid time of the received data, and then the timer is started, and the received control instruction data is sent to the data distribution component of the M2M gateway; if the state of data indicates that the priority level of the existing control instruction data of the corresponding device or the corresponding device group is higher than that of the received control instruction data, the control instruction processing component discards the received data.

Preferably, if the state of data indicates that the priority level of the existing control instruction data of the corresponding device or the corresponding device group is lower than that of the received control instruction data or same to that of the received control instruction data, the control instruction processing component then removes the existing control instruction data of the corresponding device or the corresponding device group and stores the received control instruction data, and at the same time resets the time value of the data timer according to the information of a valid time of the data, restarts the timer and forwards the received control instruction data to the data distribution component of the M2M gateway.

After receiving the control instruction data, the data distribution component of the M2M gateway reads the device identifier or the device group identifier and the control information included therein, and creates a control signalling carrying the device identifier or the device group identifier and the control information and distributes it to a corresponding M2M terminal device.

After the terminal device receives the control signalling, an operation indicated by the control information is analyzed and executed, and the execution result is fed back to the control instruction processing component. The execution result comprises two cases as following: 1) device identifier or the device identifier group + success indicator + state value; 2) device identifier or the device identifier group + failure indicator + reason value.

The control instruction processing component can perform the processing according to a feedback of the terminal device in the following way:
if the feedback result indicates that the operation succeeds, then the control instruction processing component removes the control instruction data of the corresponding device or the corresponding device group in a local control instruction data processing list, and sends the execution result to the data storage component of the M2M gateway so as to provide the operating data query for the user or the service platform, wherein the device identifier or the device group identifier and the state value are included in the execution result; and if the feedback result indicates that the operation fails, then the control instruction processing component resends the control instruction data of a corresponding device or a corresponding device group according to the maximum number of resending times.

Preferably, if the control instruction data expires or reaches the maximum number of resending times, then the control instruction processing component removes the control instruction data of the corresponding device or the corresponding device group in the local control instruction data processing list, and sends the execution result to the data storage component of the M2M gateway so as to provide the operating data query for the user or the service platform, wherein the device identifier or the device group identifier and the state value are included in the execution result; and at the same time after filtering the reason value, the control instruction processing component informs the user or the service platform of a runtime exception of the terminal device, and the filter condition can be set according to different classes, different time and different reason values.

### Example Two

In example two, the data detection element triggering the service control is taken as an example to illustrate.

When detecting that the data collected in the data storage component of the M2M gateway meets a service triggering time value of control service B in "a data detection control service list" stored locally, the data detection element of the service triggering component sends a service triggering signalling to the instruction query component, wherein the data detection control service list comprises a control service identifier, a device identifier or a device group identifier and a service triggering threshold, wherein the service triggering signalling comprises a control service identifier of control service B.

In example two, the subsequent processing for the service control is same to example one, and needs not be repeated herein.

### Example Three

In example three, the scenario selection element triggering the service control is taken as an example to illustrate.

When detecting that a local or remote scenario mode selection signalling for indicating the triggering control service C, the scenario selection element of the service triggering component sends a service triggering signalling to the instruction query component, wherein the scenario mode selection signalling comprises a scenario mode identifier, and a device identifier or a device group identifier and a service triggering threshold, and the scenario selection component queries a control service identifier corresponding to the scenario mode identifier through "a scenario selection control service list" stored locally, wherein the service triggering signalling comprises a control service identifier of control service C.

In example two, the subsequent processing for the service control is same to example one, and needs not be repeated herein.

It can be seen from the above description, the solution of embodiments of the present invention realizes the following technical effect: the M2M gateway determines a control service currently triggered, acquires a control instruction corresponding to the control service, and sends the control instruction to a terminal device and/or a terminal device group, which provides an effective mechanism to realize the service control over terminal devices via the M2M gateway, thereby realizing the service control over a terminal device and then collaborative interactions among the terminal devices.

Apparently, those skilled in the art shall understand that the above components and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. In this way, the present invention is not restricted to any particular hardware and software combination.

The above description is only preferred embodiments of the present invention and is not intended to limit the present invention, and the present invention can have a variety of changes and modifications for ordinary person skilled in the field. Any modification, equivalent replacement, or improvement made within the spirit and principle of the present invention shall all fall within the protection scope of the present invention.

## Claims

1. A service control method of a terminal device, **characterized by** comprising:
a Machine-to-Machine/Man (M2M) gateway determining a control service triggered currently;
the M2M gateway acquiring a control instruction corresponding to the control service; and
the M2M gateway sending the control instruction to a terminal device and/or a terminal device group.

2. The method according to claim 1, **characterized in that** the M2M gateway determining the control service triggered currently comprises:
the M2M gateway detecting a service triggering condition currently met; and
the M2M gateway acquiring the control service corresponding to the service triggering condition according to a corresponding relationship between the service triggering condition and the control service.

3. The method according to claim 2, **characterized in that** the M2M gateway detecting the service triggering condition currently met comprises at least one of the following:
the M2M gateway detecting whether a current system time meets a preset service triggering time value;
the M2M gateway detecting whether collected data meets a preset service triggering threshold; and
the M2M gateway detecting whether a control instruction of a scenario mode selection service is received.

4. The method according to claim 1, **characterized in that** the M2M gateway sending the control instruction to the terminal device and/or the terminal device group comprises:
the M2M gateway judging whether a control instruction to be processed by the terminal device and/or the terminal device group is not stored;
based on that the control instruction to be processed by the terminal device and/or the terminal device group is not stored, sending the control instruction to the terminal device and/or the terminal device group.

5. The method according to claim 4, **characterized in that** when the control instruction to be processed by the terminal device and/or the terminal device group is not stored, the method further comprises:
the M2M gateway storing the control instruction.

6. The method according to claim 4, **characterized in that** when the control instruction to be processed by the terminal device and/or the terminal device group is stored, the method further comprises:
the M2M gateway judging whether a priority level of the control instruction is not lower than a priority level of the control instruction to be processed;
based on that the priority level of the control instruction is not lower than a priority level of the control instruction to be processed, sending the control instruction to the terminal device and/or the terminal device group.

7. The method according to claim 6, **characterized in that** when the priority level of the control instruction is not lower than the priority level of the control instruction to be processed, the method further comprises:
the M2M gateway storing the control instruction, and deleting the control instruction to be processed.

8. The method according to claim 6, **characterized in that** the priority level of the control instruction is lower than a priority level of the control instruction to be processed, the method further comprises:
the M2M gateway discarding the control instruction.

9. The method according to any one of claims 1 to 8, **characterized in that** the M2M gateway sending the control instruction to the terminal device and/or the terminal device group comprises:
the M2M gateway sending the control instruction to the terminal device and/or the terminal device group indicated by the control instruction.

10. The method according to any one of claims 1 to 8, **characterized in that** after the M2M gateway sends the control instruction to the terminal device and/or the terminal device group, the method further comprises:
the M2M gateway processing an execution result of executing the control instruction according to a feedback from the terminal device and/or the terminal device group.

11. The method according to claim 10, **characterized in that** the M2M gateway processing the execution result of executing the control instruction according to the feedback from the terminal device and/or the terminal device group comprises:
the M2M gateway receiving information about the execution result of executing the control instruction, wherein the information about the execution result of executing the control instruction is fed back by the terminal device and/or the terminal device group after the terminal device and/or the terminal device group execute the the control instruction; and
in the case where the information about the execution result indicates that the execution of the control instruction fails, the M2M gateway resending the control instruction to the terminal device and/or the terminal device group.

12. The method according to claim 11, **characterized in that** resending the control instruction to the terminal device and/or the terminal device group comprises:
the M2M gateway judging whether a valid time of the control instruction is expired;
based on that the valid time of the control instruction is not expired, resending the control instruction to the terminal device and/or the terminal device group.

13. The method according to claim 11, **characterized in that** resending the control instruction to the terminal device and/or the terminal device group comprises:
the M2M gateway judging whether the current number of resending times does not exceed the maximum number of resending times of the control instruction;
if the current number of resending times does not exceed the maximum number of resending times of the control instruction, resending the control instruction to the terminal device and/or the terminal device group.

14. The method according to claim 11, **characterized in that** resending the control instruction to the terminal device and/or the terminal device group comprises:
the M2M gateway judging whether a valid time of the control instruction is expired;
based on that a valid time of the control instruction is not expired, judging whether the current number of resending times does not exceed the maximum number of resending times of the control instruction; and
based on that the current number of resending times does not exceed the maximum number of resending times of the control instruction, resending the control instruction to the terminal device and/or the terminal device group.

15. The method according to any one of claims 12 to 14, **characterized in that** in the case where a judgment result is no, the method further comprises:
the M2M gateway acquiring a reason value that the terminal device fails to execute the control instruction, informing an M2M service platform and/or a corresponding user of the reason, and deleting the control instruction.

16. The method according to any one of claims 11 to 14, **characterized in that** in the case where the information about the execution result indicates that the execution of the control instruction succeeds, the method further comprises:
the M2M gateway acquiring a state value that the terminal device successfully executes the control instruction, and deleting the control instruction.

17. The method according to any one of claims 12 to 15, **characterized in that** in the case where the feedback from the terminal device or the terminal device group is not received, the method further comprises:
when a storage time of the control instruction exceeds the valid time of the control instruction, and/or the number of resending times of the control instruction exceeds the maximum number of resending times of the control instruction, the M2M gateway deleting the control instruction, and informing the M2M service platform and/or the corresponding user of a situation.

18. The method according to any one of claims 1 to 8, **characterized in that** sending the control instruction to the terminal device and/or each terminal device in the terminal device group comprises:
the M2M gateway acquiring a control instruction, which is corresponding to the terminal device and/or the terminal device group and is to be currently sent, from a plurality of control instructions; and
the M2M gateway sending the control instruction which is corresponding to the terminal device and/or the terminal device group to the terminal device and/or the terminal device group and is to be currently sent.

19. A service control device of a terminal device, **characterized in that** the service control device is located in a Machine-to-Machine/Man (M2M) gateway, and the service control device comprises:
a determination component configured to determine a control service currently triggered;
an acquisition component configured to acquire a control instruction corresponding to the control service; and
a first processing component configured to send the control instruction to a terminal device and/or a terminal device group.

20. The device according to claim 19, **characterized in that** the determination component comprises:
a detection element configured to detect a service triggering condition currently met; and
an acquisition element configured to, according to a corresponding relationship between the service triggering condition and the control service, acquire the control service corresponding to the service triggering condition.

21. The device according to claim 20, **characterized in that** the detection element is configured to detect whether a current system time meets a preset service triggering time value, and/or whether collected data meets a preset service triggering threshold, and/or whether a control instruction of a scenario mode selection service is received.

22. The device according to claim 19, **characterized in that** the first processing component comprises:
a first judgment element configured to judge whether a control instruction to be processed by the terminal device and/or the terminal device group is not stored; and
a first sending element configured to, when a judgment result of the first judgment element is yes, send the control instruction to the terminal device and/or the terminal device group.

23. The device according to claim 22, **characterized in that** the first processing component further comprises:
a storage element configured to, when a judgment result of the first judgment element is yes, store the control instruction.

24. The device according to claim 22, **characterized in that**
the first processing component further comprises: a second judgment element configured to, when a judgment result of the first judgment element is no, judge whether a priority level of the control instruction is not lower than a priority level of a control instruction to be processed; and
the first sending element further configured to, when a judgment result of the second judgment element is yes, send the control instruction to the terminal device and/or the terminal device group.

25. The device according to any one of claims 22 to 24, **characterized in that** the first processing component further comprises:
a discarding element configured to, when a judgment result of the first judgment element or the second judgment element is no, discard the control instruction.

26. The device according to any one of claims 19 to 25, **characterized by** further comprising:
a second processing component configured to process an execution result of executing the control instruction according to a feedback from the terminal device and/or the terminal device group.

27. The device according to claim 26, **characterized in that** the second processing element comprises:
a receiving element configured to receive information about the execution result fed back after the terminal device and/or the terminal device group executing the control instruction; and
a processing element configured to, in the case where the information about the execution result indicates that the execution of the control instruction fails, resend the control instruction to the terminal device and/or the terminal device group.

28. The device according to claim 27, **characterized in that** the processing element comprises:
a third judgment element configured to judge whether a valid time of the control instruction is not expired; and
a second sending element configured to, when a judgment result of the third judgment element is yes, resend the control instruction to the terminal device and/or the terminal device group.

29. The device according to claim 27, **characterized in that** the processing element further comprises:
a fourth judgment element configured to judge whether a current number of resending times does not exceed a maximum number of resending times of the control instruction; and
a third sending element configured to, when a judgment result of the fourth judgment element is yes, resend the control instruction to the terminal device and/or the terminal device group.

30. The device according to claim 28 or 29, **characterized in that** the processing element further comprises:
an informing element configured to, when a judgment result of the third judgment element or the fourth judgment element is no, acquire a reason value that the terminal device fails to execute the control instruction, inform an M2M service platform and/or a corresponding user of a reason, and delete the control instruction.

31. The device according to any one of claims 27 to 29, **characterized in that** the processing element,
is further configured to, in the case where the information about the execution result indicates that the execution of the control instruction succeeds, acquire a state value that the terminal device successfully executes the control instruction, and delete the control instruction.

32. The device according to claim 26, **characterized in that** the second processing component,
is further configured to, in the case of not having received the feedback from the terminal device and/or the terminal device group, when a storage time of the control instruction exceeds the valid time of the control instruction and/or the number of resending times of the control instruction exceeds the maximum number of resending times of the control instruction, delete the control instruction, and inform the M2M service platform and/or the corresponding user of a situation.

33. A Machine-to-Machine/Man (M2M) gateway, **characterized by** comprising: a service control device of a terminal device according to any one of claims 19 to 32.
